(19) Europäisches Patentamt
European Patent Office
Office européen des brevets

(11) EP 1 959 532 A1

(12) **EUROPEAN PATENT APPLICATION**

(43) Date of publication:
20.08.2008 Bulletin 2008/34

(51) Int Cl.:
*H02H 6/00* (2006.01)    *B25J 9/16* (2006.01)

(21) Application number: 07102555.5

(22) Date of filing: 16.02.2007

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK RS

(71) Applicant: ABB Research Ltd.
8050 Zürich (CH)

(72) Inventors:
• **Andersson, Erik**
**753 13, Uppsala (SE)**

• **Demetriades, Georgios**
**725 91, Västerås (SE)**
• **Zelaya de la Parra, Hector**
**722 46, Västerås (SE)**

(74) Representative: **Kock, Ina**
**ABB AB**
**Legal Affairs and Compliance/**
**Intellectual Property**
**Forskargränd 7**
**721 78 Västerås (SE)**

(54) **Sensor-free temperature monitoring of an industrial robot motor**

(57)    A method, unit and system for sensor-free monitoring of at least one a temperature in a permanent magnet electric motor arranged on an industrial robot. The invention is estimating at least one temperature in the electric motor, using ambient temperature, torque, rotational speed of the electric motor as input to a model and is using the model to estimate the temperature.

Figure 3

**Description**

TECHNICAL AREA

This invention relates to methods and means for sensor-free monitoring of at least one a temperature in a permanent magnet electric motor arranged on an industrial robot by implementing a real-time thermal model of the motor. The invention also described methods and means on how the parameters of the real-time thermal model can be optimized to motors with different sizes and geometries.

TECHNICAL BACKGROUND

Heat dissipation is always an important issue in designing systems and especially in energy conversion systems, such as motors. Losses play a major role in heat dissipation and is the major mechanism ruling the thermal behavior of the energy conversion system. The systems have to be deigned and monitored in order to prevent overheating which could lead to system failure.

Accurate description of the thermal behavior of the system can be beneficial in terms of thermal management, system utilization and last but not least thermal protection of the system. Electrical motors are one of the most important energy conversion systems used in industry today.

Electrical motors have to operate within a specified range of temperature and if they are overheated the motors run the risk of demagnetization of the magnets and/or stator winding. Failure of a motor can result in failure of a whole production system and then the economical consequences can be quite substantial.

In order to avoid possible overheating failures of electrical motors, different kinds of thermal protection sensors are used. The most common type of protection available is the Positive Thermal Coefficient (PTC) sensor.

U.S. Pat. No. 7,038,896 entitled "Solid state motor protector" describes a solid state polymer PTC chip to be used as a protection device for electric motors and particularly useful with automotive operating voltage.

A PTC sensor is a non linear resistance which increases dramatically at a certain temperature. This resistance can be measured and hence the motor can be stopped before the temperature rise exceeds the predefined threshold level. The disadvantage of this method is the inaccuracy under the fact that the PCT sensor can only be used as a warning or as a shutdown signal and not as an actual temperature measurement sensor.

Normally, to reduce cost there is only one PTC applied to the end windings in the motor, hence the PCT only measures the end winding motor temperature on one phase. This implies that effective protection can only be achieved if the temperature at the point of connection happens to be the highest in the motor winding. In most cases the temperature will not differ much between different phases so one PTC can protect the motor, but if more current flows trough only one phase, as for example in stall torque situations, and if the PTC is not applied to that particular phase, the motor is practically unprotected and the motor can then be damaged.

One way to improve this situation is to use a PTC on each phase, in a three phase motor with the added penalty of a higher cost.

Equipping the motor with temperature sensors instead of PTCs would give good knowledge of the temperature inside the motor but it would be an even more expensive solution since these temperature sensors are expensive and one would also need equipment to read and analyze the temperature.

Instead of measuring the motor temperatures one could use a model to estimate the motor temperatures. U.S. Pat. No. 6,283,631 entitled "Electronic device for modeling the temperature of a motor" describes an electronic device for modeling the temperature of a motor by utilizing signals output from current sensors placed on motor power supply phases. This requires the installation of current sensors.

SUMMARY OF THE INVENTION

The preferred embodiment of the present invention is a method to implement a sensor-free monitoring of at least one a temperature in a permanent magnet electric motor arranged on an industrial robot by real-time thermal model of the motor. The real-time thermal model (RTTM) can estimate the temperature of different motor parts and windings based only on motor torque, rotational speed of the motor, and the ambient temperature and thereby offer reliable thermal protection of the motor. One of the advantages of the present invention is that it does not require the installation of any sensors on the motor. Another advantage of the present invention is that the temperature of different motor parts can be monitored. A further advantage of the present invention is that the model only uses input data that are available in the robot control system thus making the implementation easy.

Another embodiment of the present invention is a method to estimate the parameters of the real-time thermal model of a permanent magnet electric motor. The model parameters are estimated by an optimization where the difference between the measured motor temperature from a test run and model output temperature using the same motor data as in the test run are minimized.

The real-time thermal model in the preferred embodiment offers more protection than using a Positive Thermal Coefficient (PTC) sensor applied to one phase, especially in a stall torque situation. The real-time thermal model can estimate the actual temperature in the motor where as a Positive Thermal Coefficient sensor solution only gives a shutdown signal if the temperature is too high in the measured point.

In a further aspect of the invention, the method may be carried out by a computing device comprising one or more microprocessor units or computers. The modeling device comprises memory means for storing one or more computer programs for carrying out the modeling methods for temperature estimation. Preferably such computer programs contain instructions for the processor to perform the method as mentioned above and described in more detail below.

One embodiment of the invention is a method for sensor-free monitoring of at least one a temperature in a permanent magnet electric motor arranged on an industrial robot by estimating at least one temperature in the electric motor, using ambient temperature, torque, rotational speed of the permanent magnet electric motor as input to a model and using said model to estimate the temperature.

According to another embodiment of the invention, the permanent magnet electric motor is driving an industrial robot axis.

According to another embodiment of the invention, the torque, rotational speed of the permanent magnet electric motor is estimated from parameters taken from robot control system of the motor.

According to another embodiment of the invention, the ambient temperature is measured and input to the model.

According to another embodiment of the invention, the ambient temperature is manually entered and input to the model.

According to another embodiment of the invention, the model is a thermal network model.

According to another embodiment of the invention, parts of the permanent magnet electric motor are described as nodes in a thermal network.

According to another embodiment of the invention, connections between nodes in the thermal network are models of heat flow between parts of the permanent magnet electric motor.

According to another embodiment of the invention, all resistance to heat flow between two parts of the permanent magnet electric motor is parameterized in one thermal flow resistance.

According to another embodiment of the invention, the heat capacity of a motor part is parameterized in one thermal capacitance.

According to another embodiment of the invention, the thermal network model uses at least one motor parameter which is time dependent, such as torque, position, speed, acceleration to estimate one or many motor temperatures.

According to another embodiment of the invention, the parameters used in the model can be optimized.

According to another embodiment of the invention, the method further comprises of the step of making test runs, with different work loads, on a similar motor and measuring the temperature.

According to another embodiment of the invention, the method further comprises of the step of comparing model estimated temperatures on a motor with same work loads as in the test runs and the measured temperatures for said test runs.

According to another embodiment of the invention, the method further comprises of the step of optimizing the model parameters to minimize the difference between model estimated temperatures on a motor with same work loads as in the test runs and the measured temperatures for said test runs.

In a further aspect of the invention, a control unit for sensor-free monitoring of at least one temperature in a permanent magnet electric motor arranged on an industrial robot and the control unit comprises means for estimation of at least one temperature in said electric motor, using ambient temperature, torque, rotational speed of the permanent magnet electric motor as input to a model and using said model to estimate the temperature.

According to another embodiment of the invention, the control unit comprises means for estimation of torque, rotational speed of the permanent magnet electric motor from parameters taken from robot control system of the motor.

According to another embodiment of the invention, the control unit comprises means for receiving a measurement of the ambient temperature.

According to another embodiment of the invention, the control unit comprises means for receiving a manually entered ambient temperature.

According to another embodiment of the invention, control unit comprises means for changing or updating the model parameters.

According to another embodiment of the invention, the control unit is arranged with a memory storage device for storing one or more computer programs which when read into a computer or processor will cause the computer or processor to estimate at least one temperature in the electric motor, using ambient temperature, torque, rotational speed of the permanent magnet electric motor as input to a model and using said model to estimate the temperature.

According to another embodiment of the invention, the memory storage device arranged with the control unit is arranged storing the one or more computer programs in a read-only memory or as firmware.

In a further aspect of the invention, a system comprising an industrial robot with at least one axis and a permanent magnet electric motor arranged to drive said axis, and a robot control unit arranged to control said motor and the control unit comprises means for estimation of at least one temperature in said electric motor, using ambient temperature, torque, rotational speed of the permanent magnet electric motor as input to a model and using said model to estimate the temperature.

According to another embodiment of the invention, the industrial robot is arranged with several axes and one permanent magnet electric motor is arranged to drive each axis and said robot control system is adapted to sensor-free monitoring of at least one temperature in at least one permanent magnet electric motor.

In a further aspect of the invention, a computer program product, directly loadable into the internal memory of a digital computer comprising software code portions for carrying out a method according to the description of the present invention when said product is run on a computer.

In a further aspect of the invention, a computer readable medium comprising a computer program which when read into a computer or processor will cause the computer or processor to carry out a method according to the description of the present invention.

BRIEF DESCRIPTION OF THE DRAWINGS

The invention will be elucidated by reference to an embodiment partially illustrated in the drawings.

Figure 1 shows a simple input/output description of the real-time thermal model (RTTM).
Figure 2 shows an input/output description of the real-time thermal model in relation to the electric model of the permanent magnet synchronous motor.
Figure 3 shows the main parts of a Permanent Magnet Synchronous Motor (PMSM).
Figure 4 shows the main heat flows in the RTTM if the PMSM.
Figure 5 shows the equivalent thermal network representing the RTTM of the PMSM.
Figure 6 is a flowchart for an estimation/optimization method for thermal parameters according to an embodiment of the invention.
Figure 7 plots the measured temperatures and the simulated temperatures for two points on a motor with optimized thermal parameters.
Figure 8 plots the estimation error of the simulated temperatures with optimized thermal parameters for a motor.
Figure 9 shows one embodiment of the present invention.

DETAILED DESCRIPTION OF THE EMBODIMENTS

Detailed descriptions of the preferred embodiment are provided herein. It is to be understood, however, that the present invention may be embodied in various forms. Therefore, specific details disclosed herein are not to be interpreted as limiting, but rather as a basis for the claims and as a representative basis for teaching one skilled in the art to employ the present invention in virtually any appropriately detailed system, structure or manner.

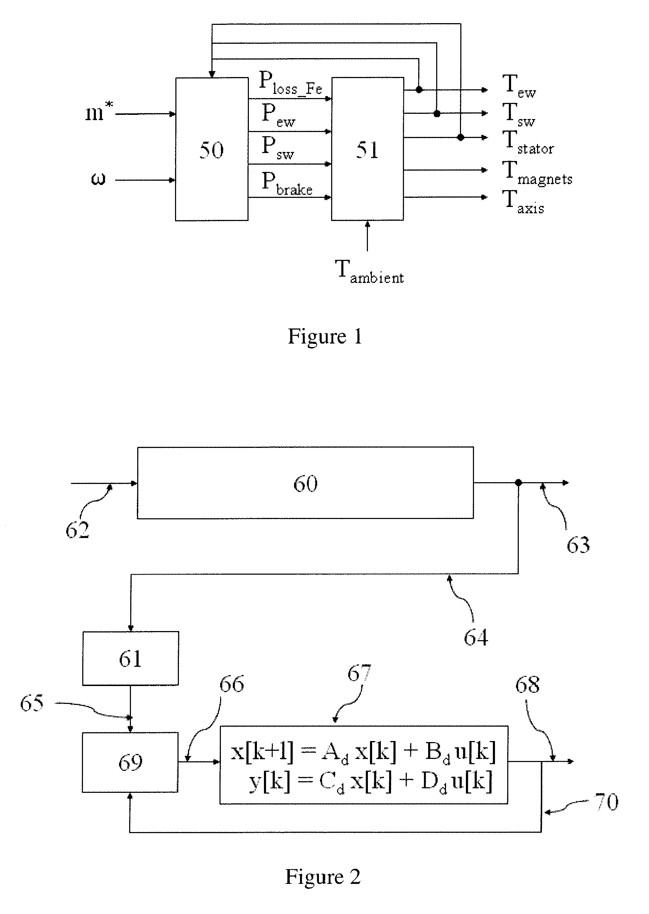

Figure 1 shows a simple input/output description of the real-time thermal model (RTTM). Inputs are the speed of the motor $\omega$, the torque m* and the ambient temperature $T_{ambient}$. The ambient temperature can be manually entered, estimated or measured.

A software based loss calculation module 50 calculates the losses based on the motor speed $\omega$ and the torque m*. The losses estimated are; $P_{loss\_Fe}$ - iron losses, $P_{ew}$ - losses in end windings, $P_{sw}$ - losses in stator windings, $P_{brake}$ - brake losses. The losses are also a function of the temperatures in the winding and the stator so the estimated temperatures from the RTTM are also input into the loss calculation module 50. The general loss calculation function can be described as:

$$P = f(\omega, \ m*, \ T)$$

where T is the estimated temperature of the motor part and P is the estimated losses in that part. In one embodiment of the invention the software based loss calculation function f is a lookup table function

The real-time thermal model 51 uses the estimated losses from the loss calculation module 50 and the ambient temperature $T_{ambient}$ to estimate motor part temperatures. The real-time thermal model 51 is a thermal network model. The ambient temperature $T_{ambient}$ can be measured, estimated or manually entered.

The output of the real-time thermal model 51 are a number of temperatures of motor parts, for example; $T_{ew}$ -

temperature in end windings, $T_{sw}$ - temperature in stator windings, $T_{stator}$ - temperature in stator, $T_{magnets}$ - temperature in permanent magnets and $T_{axis}$ - temperature in motor axis

The physical power losses $P_{losses}$ in a motor consists of resistive winding losses, stator iron losses, friction losses in the bearings and friction losses due to turbulence caused by the internal air flow.

The resistive winding losses of the stator winding can be defined as

$$P_{Loss\_Cu} = \Sigma \ R_i \ (I_i)^2$$

Where,

$R_i$ is the winding resistance at a certain temperature for phase i, and $I_i$ is the rms value of the current in each phase i.

Stator iron losses can be divided in losses due to hysteresis in the yoke, $P_h$, and losses due to the eddy currents flowing in the laminations of the yoke, $P_e$. The total stator losses as well as the hysteresis and eddy current losses are defined as,

$$P_{Loss\_Fe} = P_h + P_e$$

$$P_h = k_h \ (B_{max})^2 \ f$$

$$P_e = k_h \ (B_{max})^2 \ f^2$$

Where, $B_{max}$ represents the maximum magnetic flux density in a Permanent Magnet Synchronous Motor (PMSM), f is the electrical frequency, $k_h$ and $k_e$ are empirically derived parameters.

The real-time thermal model (RTTM) is expected to predict accurately the heat flow in the motor in a given application and therefore the motor can be used more efficiently. Drive cycles can be simulated during the system design stage and the thermal behavior of the motor system can be studied.

Figure 2 shows an input/output description of the real-time thermal model in relation to the electric model 60 of the permanent magnet synchronous motor.

The electric model 60 of the permanent magnet synchronous motor is used for online modeling and control of the electric motor. Some output parameters from the electric model 60 of the motor are taken 64 and in a calculation step 61 the motor speed ω and the torque m* 65 is calculated. The loss calculation module 69 uses the calculated motor speed ω and the torque m* 65 as well as some of the estimated motor temperatures 70 to estimate/calculate the motor losses 66.

The real-time thermal model 67 estimates the motor temperatures 70. The thermal model 67 is a Discrete State-Space Model.

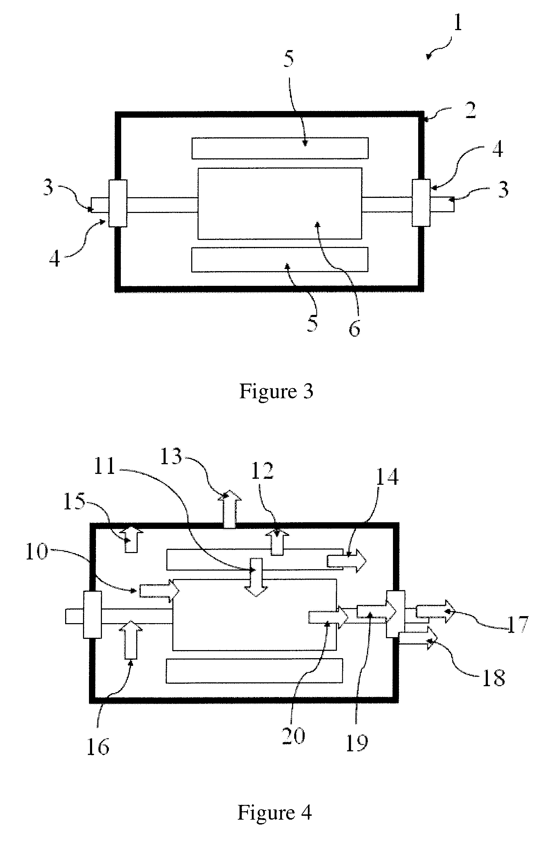

Figure 3 shows the main parts of a typical Permanent Magnet Synchronous Motor (PMSM). The different components of the motor 1 are enclosed in a chassis 2 and the rotor 8 with attached permanent magnets rotates on a shaft 3 with bearings 4 in chassis openings. The stator 5 with windings is arranged around the rotor 6 and attached to the chassis 2. Variations of the structure may exist.

Figure 4 shows some of the modeled heat flows in the real-time thermal model if the Permanent Magnet Synchronous Motor.

Arrow 10 represents heat flow from internal air to rotor
Arrow 11 represents heat flow from winding to rotor
Arrow 12 represents heat flow from winding to chassis
Arrow 13 represents heat flow from chassis to ambient air
Arrow 14 represents heat flow from winding to internal air
Arrow 15 represents heat flow from internal air to chassis
Arrow 16 represents heat flow from internal air to shaft
Arrow 17 represents heat flow from shaft to ambient air
Arrow 18 represents heat flow from bearings to ambient air
Arrow 19 represents heat flow from shaft to bearings

Arrow 20 represents heat flow from rotor to shaft

Thermal networks can be simulated with equivalent electrical circuits. A temperature - voltage analogy makes it possible to use electrical components to describe and simulate thermal behavior. Ohm's law

$$U = RI$$

can be seen as the equivalent of thermal model

$$\Delta T \;=\; R_{th}\, P$$

where,

$\Delta T$ is the temperature difference between two bodies - equivalent to voltage U in Ohm's law,

$R_{th}$ is the thermal flow resistance - equivalent to electrical resistance R in Ohm's law, and

P is the flow of heat i.e. energy - equivalent to current in Ohm's law.

Modeled electrical resistors may be used to represent thermal resistance and modeled electrical capacitors may be used to represent thermal capacitance. This way of approaching the problem is a convenient way to model thermal networks.

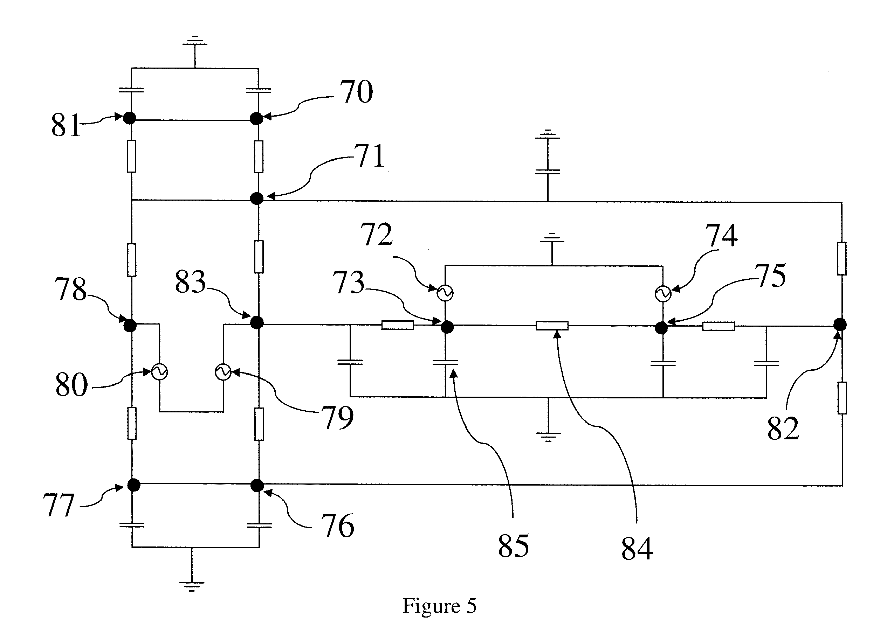

Figure 5 shows the equivalent thermal network representing a model of the Permanent Magnet Synchronous Motor. The different parts of the Permanent Magnet Synchronous Motor are nodes in the network.

In one embodiment of the invention there are ten nodes in the model of the motor. The nodes are; Ambient air 70 - around the motor, Chassis 71 - encloses the motor, Stator Yoke 83 - holds the windings, Rotor 76 - holds permanent magnets, End Winding 75 - copper winding, Stator Winding 73 - copper winding, Shaft 77 - holding the rotor, Bearings 78 - between shaft and chassis, Internal Air 82 - enclosed by the chassis, Cooling Plate 81 - the motor mounting, not shown in fig 2 but acts as a heat sink from the motor chassis.

The losses are energy fed into the model. The losses are; $P_{loss\_Fe}$ - iron losses 79 or hysteresis and eddy currents in the stator yoke, $P_{ew}$ - losses in end windings 74, $P_{sw}$ - losses in stator windings 72, and $P_{brake}$ - brake losses 80.

The thermal network model with different thermal flow resistance $R_{thx}$ (x being a number of the node connection) each representing one of the arrows in fig 3 and thus heat flow from one node to another. Only one of the thermal flow resistances shown in figure 5 is numbered i.e. 84 which is the thermal flow resistance between end winding 75 and stator winding 73. Only one of the thermal capacitance $C_{thx}$ (x being a number of the node) is numbered in figure 5. Thermal capacitance 85 is the thermal capacitance of the stator winding 73.

The thermal resistances $R_{th}$ are given by

$$R_{th} \;=\; 1/(\alpha\; A)$$

where, $\alpha$ is defined as the convection coefficient and A is the area of the structure in which convection occurs.

The thermal capacitances $C_{th}$ are given by

$$C_{th} \;=\; m\; C_p$$

where, m is the mass of the structure and Cp is the specific heat capacity of the structure.

The thermal resistances and capacitances of the motor can be calculated according to the two equations above but due to uncertainties, especially in convection coefficient and specific heat capacity of complex motor parts it is better to estimate the thermal resistances and capacitances. Additionally, and due to the large variety of motors that are used in different applications, analytical calculation of the thermal resistance and the thermal capacitances is time consuming and uncertainties may be introduced into the system.

A parameter estimation algorithm may be used to tune the thermal parameters of any Permanent Magnet Synchronous Motor.

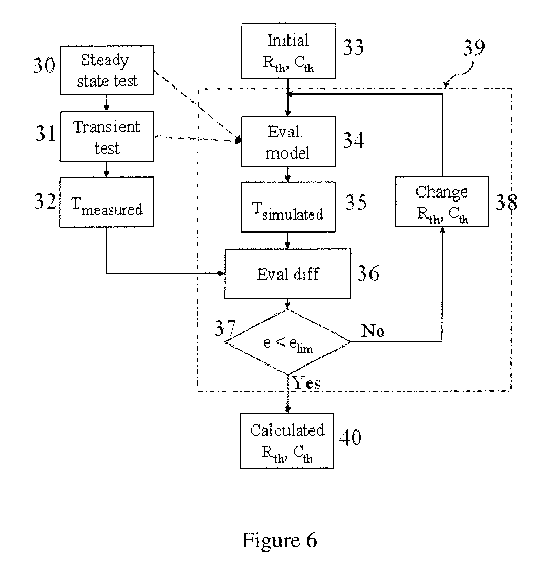

Figure 6 is a flowchart for an estimation/optimization method used to tune the thermal parameters (i.e. the $R_{thx}$ and $C_{thx}$) of any Permanent Magnet Synchronous Motor according to an embodiment of the invention. Boxes 30, 32, 32 represent actual test runs on the motor.

Box 30 is a steady state thermal testing run of the motor where the speed of the motor, the torque, the ambient temperature as well as the power losses is measured and stored. The temperature change of different parts of the motor during the test run is measured and stored.

Box 31 is a transient state thermal testing run of the motor. The speed and load on the motor is changed and the speeds of the motor, the torque, the ambient temperature as well as the power losses are measured and stored. The temperature change of different parts during the test run of the motor is measured and stored.

Box 32 is the resulting temperature vectors for the different test runs.

Boxes 33-40 are the model parameter estimation/optimization procedure.

Box 33 is the start of the estimation procedure where one selects starting parameters. These can be estimations from physical calculations, optimized parameters from a similar model or randomly chosen.

Box 34 is an evaluation of the thermal model with the same in-data (speeds, torque, ambient temperature, power losses etc.) as in the testing runs (box 30 and box 31) and with a vector of thermal parameters (e.g. resistances $R_{thx}$, capacitances $C_{thx}$).

Box 35 is the resulting temperature vectors for the simulation/modeling runs.

Box 36 is where the two temperature vectors $T_{measured}$ and $T_{simulated}$ are compared and an error measure is calculated. For example one could use:

$$e = (1/N) \ ( \ \Sigma (T_{measured} - T_{simulated})^2 \ )^{1/2}$$

where N is the number of data points.

Box 37 is where the selected error criteria is evaluated. For example, that the error measure e calculated in box 36 should be below a limit value $e_{lim}$.

In box 38, a new set of thermal parameter is suggested for the next parameter evaluation against the test runs.

All the boxes enclosed by box 39 can be seen as an offline parameter optimization procedure and when the error criteria evaluated in box 37 is fulfilled the result is box 40 with a new and optimized set of thermal parameters.

The parameter per motor type/model may be stored in a storage medium in a database. It would be possible to have an access interface with the internet where motor owners could, for free or by paying, download the latest optimized parameters for their motors from the database.

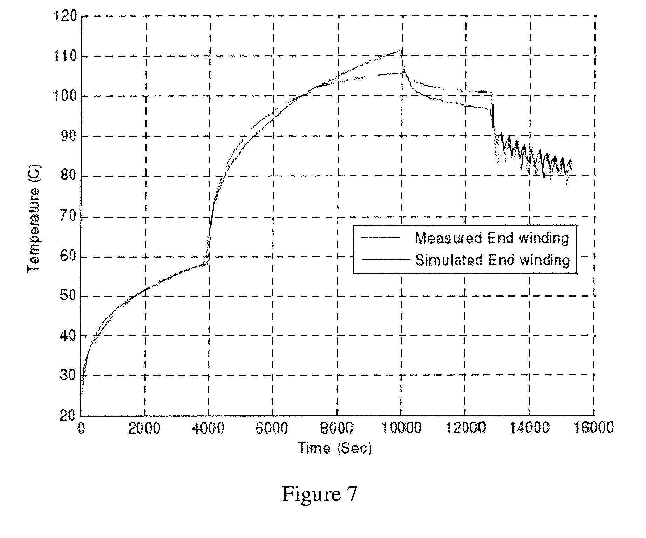

Figure 7 plots the measured temperatures and the simulated/predicted temperatures for end winding on a motor with optimized thermal parameters. Between 0 and 4000s the motor is exposed to low speeds and low torque. Between 4000s and 10000s the motor is exposed to high speeds and high torque. Between 10000s and 13000s the motor is exposed to low speeds and high torque. Between 13000s and 15000s the motor is exposed to low speeds and varying torque.

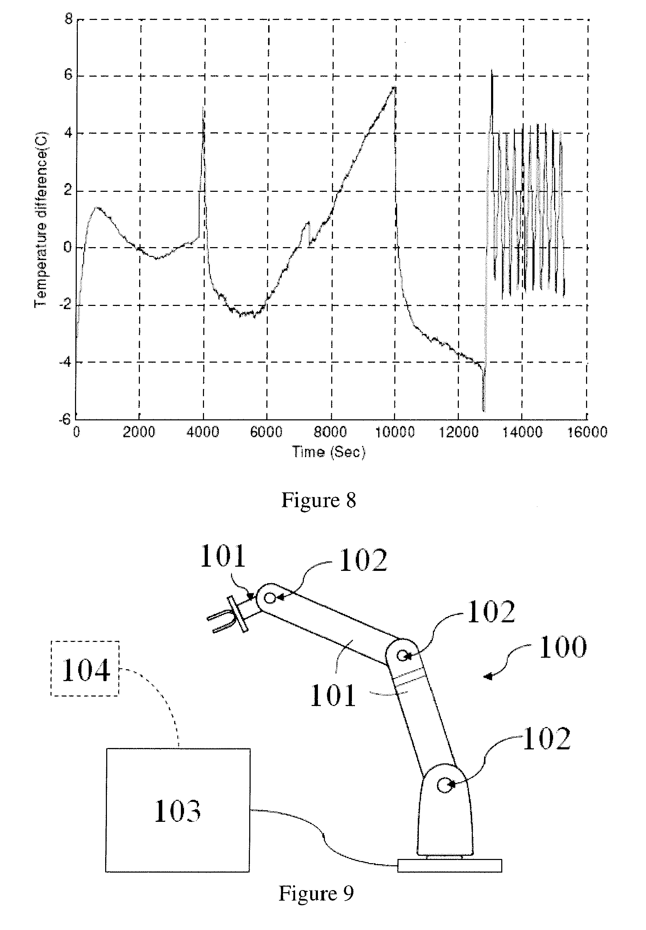

Figure 8 plots the estimation error (difference between the measured temperature and model predicted temperature in Figure 7) with optimized thermal parameters for the end winding of a motor. One should note that the simulation have an estimated temperature error that is never larger that 6 degrees and seldom larger than 4 degrees in this case.

Figure 9 shows one embodiment of a system employing the present invention. An industrial robot 100 with a manipulator arm comprises multiple axes 101. In each joint of the arm a motor 102 drives the axis. A control system 103 controls the motors and thus the movements of the industrial robot. The present invention with sensor-free temperature monitoring of the robot motors 102 can be implemented within the control system 103 or as a separate temperature monitoring system 104.

Methods of the invention may be supervised, controlled or carried out by one or more computer programs. One or more microprocessors (or processors or computers) comprise a central processing unit CPU connected to or comprised in a control unit of the robot system described. Said processors, PLCs or computers are used to perform the steps of the methods according to one or more aspects of the invention, as described above and for example with reference to Figure 1, Figure 2 or Figure 6. The computer programs for carrying out methods according to the invention may also be run on one or more general purpose industrial microprocessors or PLCs or computers instead of one or more specially adapted computers or processors.

The computer program comprises computer program code elements or software code portions that make the computer or processor perform the methods using equations, algorithms, data, stored values, calculations and the like for the methods previously described, and for example in relation to the flowchart of Figure 1, Figure 2, Figure 6 or as one embodiment of the model shown in Figure 5. A part of the program may be stored in a processor as above, but also in a ROM, RAM, PROM, EPROM or EEPROM chip or similar memory means. A part of the program may be supplied as a firmware which is instructions and data programmed into the circuits responsible for controlling or executing the methods previously described. Some of the programs in part or in whole may also be stored locally (or centrally) on, or in, a memory storage device or on other suitable computer readable medium such as a magnetic disk, CD-ROM or DVD disk, hard disk, magneto-optical memory storage means, in volatile memory, in flash memory, as firmware, or stored on a data server. Other known and suitable media, including removable memory media, flash memories, hard drives etc. may also be used. The program or data may also in part be supplied from a data network, including a public network such as the Internet.

## Claims

1. A method for sensor-free monitoring of at least one a temperature in a permanent magnet electric motor arranged on an industrial robot,
   **characterized by**
   estimating at least one temperature in said electric motor, using ambient temperature, torque, rotational speed of the permanent magnet electric motor as input to a model and using said model to estimate the temperature.

2. A method according to claim 1, wherein the permanent magnet electric motor is driving an industrial robot axis.

3. A method according to any of the claims 1-2, wherein the torque, rotational speed of the permanent magnet electric motor is estimated from parameters taken from robot control system of the motor.

4. A method according to any of the claims 1-3, wherein the ambient temperature is measured and input to the model.

5. A method according to any of the claims 1-3, wherein the ambient temperature is manually entered and input to the model.

6. A method according to any of the claims 1-5, wherein the model is a thermal network model.

7. A method according to claim 6, wherein parts of the permanent magnet electric motor are described as nodes in a thermal network.

8. A method according to claim 7, wherein connections between nodes in the thermal network are models of heat flow between parts of the permanent magnet electric motor.

9. A method according to claim 8, wherein all resistance to heat flow between two parts of the permanent magnet electric motor is parameterized in one thermal flow resistance.

10. A method according to claim 9, wherein the heat capacity of a motor part is parameterized in one thermal capacitance.

11. A method according to claim 10, wherein the thermal network model uses at least one motor parameter which is time dependent, such as torque, position, speed, acceleration to estimate one or many motor temperatures.

12. A method according to any of the claims 1-10, wherein the parameters used in the model can be optimized.

13. A method according to claim 12, wherein the method further comprises of the step of making test runs, with different work loads, on a similar motor and measuring the temperature.

14. A method according to claim 13, wherein the method further comprises of the step of comparing model estimated temperatures on a motor with same work loads as in the test runs and the measured temperatures for said test runs.

15. A method according to claim 14, wherein the method further comprises of the step of optimizing the model parameters to minimize the difference between model estimated temperatures on a motor with same work loads as in the test runs and the measured temperatures for said test runs.

16. A control unit for sensor-free monitoring of at least one temperature in a permanent magnet electric motor arranged on an industrial robot,
    **characterized by**
    said control unit comprises means for estimation of at least one temperature in said electric motor, using ambient temperature, torque, rotational speed of the permanent magnet electric motor as input to a model and using said model to estimate the temperature.

17. A control unit according to claim 16, wherein said control unit comprises means for estimation of torque, rotational speed of the permanent magnet electric motor from parameters taken from robot control system of the motor.

18. A control unit according to any of the claims 16-17, wherein said control unit comprises means for receiving a measurement of the ambient temperature.

19. A control unit according to any of the claims 16-18, wherein said control unit comprises means for receiving a manually entered ambient temperature.

20. A control unit according to any of the claims 16-19, wherein said control unit comprises means for changing or updating the model parameters.

21. A control unit according to claim 16,
**characterized in that**
the control unit is arranged with a memory storage device for storing one or more computer programs which when read into a computer or processor will cause the computer or processor to estimate at least one temperature in the electric motor, using ambient temperature, torque, rotational speed of the permanent magnet electric motor as input to a model and using said model to estimate the temperature.

22. A control unit according to claim 21,
**characterized in that**
the memory storage device arranged with the control unit is arranged storing the one or more computer programs in a read-only memory or as firmware.

23. A system comprising an industrial robot with at least one axis and a permanent magnet electric motor arranged to drive said axis, and a robot control unit arranged to control said motor,
**characterized by**
said control unit comprises means for estimation of at least one temperature in said electric motor, using ambient temperature, torque, rotational speed of the permanent magnet electric motor as input to a model and using said model to estimate the temperature.

24. A system according to claim 23, wherein the industrial robot is arranged with several axes and one permanent magnet electric motor is arranged to drive each axis and said robot control system is adapted to sensor-free monitoring of at least one temperature in at least one permanent magnet electric motor.

25. A computer program, directly loadable into the internal memory of a digital computer, comprising software code portions for carrying out a method according to any of the claims 1-15 when said product is run on a computer.

26. A computer readable medium comprising a computer program which when read into a computer or processor will cause the computer or processor to carry out a method according to the steps of any of claims 1-15.

Figure 1

Figure 2

Figure 3

Figure 4

Figure 5

EP 1 959 532 A1

Figure 6

Figure 7

Figure 8

Figure 9

**European Patent Office**

## EUROPEAN SEARCH REPORT

Application Number

EP 07 10 2555

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/124802 A1 (BROGARDH TORGNY [SE] ET AL BROGAARDH TORGNY [SE] ET AL) 1 July 2004 (2004-07-01) * paragraph [0001]; figure 1 * * paragraph [0026] - paragraph [0032] * * paragraph [0038] - paragraph [0039] * | 1-5, 16-26 | INV. H02H6/00 B25J9/16 |
| Y | | 6-15 | |
| Y | JP 09 093795 A (FANUC LTD) 4 April 1997 (1997-04-04) * paragraph [0020] - paragraph [0028]; figures 1,10 * | 6-15 | |
| A | WIJENAYAKE A H ET AL: "Modeling and analysis of permanent magnet synchronous motor by taking saturation and core loss into account" POWER ELECTRONICS AND DRIVE SYSTEMS, 1997. PROCEEDINGS., 1997 INTERNATIONAL CONFERENCE ON SINGAPORE 26-29 MAY 1997, NEW YORK, NY, USA,IEEE, US, vol. 2, 26 May 1997 (1997-05-26), pages 530-534, XP010244557 ISBN: 0-7803-3773-5 * the whole document * | 1 | |
| A | CHIN Y K ET AL: "Transient thermal analysis -using both lumped circuit approach and finite element method of a permanent magnet traction motor" AFRICON, 2004. 7TH AFRICON CONFERENCE IN AFRICA GABORONE, BOTSWANA SEPT. 15-17, 2004, PISCATAWAY, NJ, USA,IEEE, vol. 2, 15 September 2004 (2004-09-15), pages 1027-1036, XP010780576 ISBN: 0-7803-8605-1 * the whole document * | 1 | |

TECHNICAL FIELDS SEARCHED (IPC)

H02H
B25J
H02P

The present search report has been drawn up for all claims

| Place of search | Date of completion of the search | Examiner |
|---|---|---|
| The Hague | 6 July 2007 | Colombo, Alessandro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 10 2555

This annex lists the patent family members relating to the patent documents cited in the above-mentioned European search report.
The members are as contained in the European Patent Office EDP file on
The European Patent Office is in no way liable for these particulars which are merely given for the purpose of information.

06-07-2007

| Patent document cited in search report | Publication date | Patent family member(s) | | Publication date |
|---|---|---|---|---|
| US 2004124802 A1 | 01-07-2004 | DE | 10297057 T5 | 25-11-2004 |
| | | JP | 2004522602 T | 29-07-2004 |
| | | WO | 02074501 A1 | 26-09-2002 |
| JP 9093795 A | 04-04-1997 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7038896 B
- US 6283631 B